# EUROPÄISCHE PATENTSCHRIFT

(11) **EP 0 818 270 B1**
(45) Veröffentlichungstag und Bekanntmachung des Hinweises auf die Patenterteilung: **14.11.2001**
(21) Anmeldenummer: 97810335.6
(22) Anmeldetag: 02.06.1997
(51) Int. Cl.: B23Q 16/08, B23Q 11/08

(54) **Aufspannvorrichtung sowie Einrichtung zum positionsdefinierten Aufspannen eines Werkzeugs oder Werkstücks**
Clamping device and device for clamping a workpiece or tool in a precise position
Dispositif de serrage et dispositif pour le blocage indexé d'une pièce de travail ou d'un outil

(30) Priorität: 17.06.1996 CH 151296
(43) Veröffentlichungstag der Anmeldung: 14.01.1998
(73) Patentinhaber: Certa AG, 5734 Reinach (CH)
(72) Erfinder: Obrist, Basil, 5728 Gontenschwil (CH)
(74) Vertreter: Rottmann, Maximilian R.

(56) Entgegenhaltungen:
- EP-A- 0 255 042
- EP-A- 0 267 352
- WO-A-88/10172
- US-A- 2 921 487
- US-A- 3 252 358
- US-A- 5 065 991

## Beschreibung

Die Erfindung betrifft eine Aufspannvorrichtung für ein Werkzeug oder Werkstück mit einem ortsfest anzuordnenden, ersten Kupplungselement und einem dem zu spannenden Werkzeug bzw. Werkstück zugeordneten, vom ersten Kupplungselement trennbaren, zweiten Kupplungselement, wobei zur Feinpositionierung einerseits eines der beiden Kupplungselemente mit Nuten versehen ist, die zur Bestimmung der Lage in X- und/oder Y-Richtung mit am anderen Kupplungselement angeordneten Zentrierzapfen zusammenzuwirken bestimmt sind, und andererseits eines der beiden Kupplungselemente vorstehende Anschlagflächen und das andere Kupplungselement plane Auflageflächen aufweist, welch letztere nach erfolgtem Spannen an den Anschlagflächen zur Anlage kommen und damit die gegenseitige Lage der beiden Kupplungselemente in Z-Richtung bestimmen.

Ferner betrifft die Erfindung eine Einrichtung zum positionsdefinierten Aufspannen eines Werkzeugs oder Werkstücks, mit einer Werkstückaufnahme, an der mehrere Kupplungselemente angeordnet sind, welche letztere mit einer korrespondierenden Anzahl von ortsfest angeordneten Kupplungselementen zusammenzuwirken bestimmt sind, wobei die Nuten und Zentrierzapfen der Aufspannvorrichtungen in ihrer Gesamtheit die definitive Lage der Werkstückaufnahme sowohl in X- und Y-Richtung wie auch bezüglich der Winkellage um eine definierte Z-Achse festlegen.

Aus der EP 0 255 042 B1 ist eine Spannvorrichtung für ein Werkzeug für eine Werkzeugmaschine bekannt, welche aus einem Spannfutter und einem dem zu spannenden Werkzeug zugewandten Werkzeughalter besteht. Das Spannfutter weist von der Unterseite vorstehende Pfosten und Leisten auf, wobei die Leisten die Pfosten überragen und mit Anlageflächen zur Ausrichtung des Werkzeugs versehen sind. Der Werkzeughalter weist eine zur Anlage an die Pfosten plane Oberfläche auf, in die auf die Leisten des Spannfutters ausgerichtete Nuten geschnitten sind, wobei die Nuten mit zur Anlage an die Leisten ausgebildeten, elastischen Lippen versehen sind. Zum Spannen des Werkzeughalters ist ein in letzterem verankerbarer Zugbolzen vorgesehen.

Um dem Werkzeughalter beim Deponieren ausserhalb der Werkzeugmaschine einen sicheren Stand zu ermöglichen und eine Beschädigung des Zugbolzens zu vermeiden, muss der Zugbolzen vor dem Ablegen des Werkzeughalters entfernt werden. Nach dem Entfernen des Zugbolzens kann der Werkzeughalter auf seiner planen Oberfläche abgestellt werden. Dabei besteht jedoch die Gefahr, dass die elastischen Lippen mechanisch beschädigt und/oder die Nuten verschmutzt werden. Diese Gefahr besteht auch, wenn der Werkzeughalter seitlich abgelegt wird, wobei es keine Rolle spielt, ob der Zugbolzen zuvor entfernt wurde oder nicht. Es versteht sich, dass mit einer derartigen Spannvorrichtung vorsichtig umzugehen ist, da die für die Feinzentrierung wichtigen Nuten und elastischen Lippen exponiert sind. Ausserdem eignet sich die Spannvorrichtung nicht für grosse und schwere Werkzeuge, da mit grossen und schweren Vorrichtungen erfahrungsgemäss nicht mit der gleichen Sorgfalt wie mit kleinen und leichten Spannvorrichtung umgegangen werden kann.

Aus der US-A-29 21 487 ist eine Spannvorrichtung bekannt, mittels welcher die Winkellage eines Werkstückes verändert werden kann. Die Spannvorrichtung weist dazu eine drehbare Platte auf, welche von einem mit Markierungen versehenen Bund umfasst wird. Die Platte ist auf der Oberseite mit Gewindebohrungen versehen, welche dem Befestigen eines Werkstücks dienen. Obwohl die Platte gegenüber dem Unterteil drehbar ist, kann sie nicht entfernt werden.

Die WO-A-50 65 991 offenbart eine Positioniereinrichtung für zwei zu fügende Bauteile. Das eine dieser Bauteile weist ein vorkragendes und sich verjüngendes Positionierelement auf, das beim Fügen in eine sich dabei verformende Ausnehmung des anderen Bauteils eindringt. Das mit dem vorkragenden und sich verjüngenden Positionierelement versehene Bauteil ist auf der Aussenseite mit einem umlaufenden Bund versehen.

Es ist daher die Aufgabe der Erfindung, eine Aufspannvorrichtung der eingangs genannten Art derart zu verbessern, dass diese robuster und unempfindlicher in der Handhabung ist.

Diese Aufgabe wird durch die im Anspruch 1 angeführten Merkmale gelöst.

Durch das Anordnen des Spannbolzens am ortsfesten Kupplungselement wird sichergestellt, dass das dem zu spannenden Werkzeug bzw.

Werkstück zugeordnete Kupplungselement keine weit hervorstehenden Teile aufweist, wodurch das Abstellen dieses Kupplungselements erleichtert wird. Das Vorsehen eines Abstützorgans am dem Werkzeug bzw. Werkstück zugeordneten Kupplungselement, welche die für die Feinzentrierung wesentlichen Teile des Kupplungselements überragt und mit einer endseitigen Abstützfläche versehen ist, ergibt ein robustes Kupplungselement, welches einfach und unempfindlich in der Handhabung ist, da die relevanten Zentrierteile, welche auf Verschmutzung sowie mechanische Einwirkungen sehr empfindlich regieren, geschützt sind und die Gefahr einer Beschädigung weitestgehend reduziert wird. Ausserdem ermöglicht das Abstützorgan dem Kupplungselement einen stabilen Stand auf der Unterlage.

Bei einer bevorzugten Ausführungsform der Aufspannvorrichtung wird vorgeschlagen, die Innenseite des Abstützorgans derart auszubilden, dass es mit der Aussenkontur des ortsfesten Kupplungselements korrespondiert, wobei das Abstützorgan die für die Feinzentrierung wesentlichen Teile des zugehörigen Kupplungselements um mehr als den Betrag der Überhöhung der vorstehenden Anlageflächen des ortsfesten Kupplungselements überragt. Durch diese Merkmale wird erreicht, dass im verriegelten Zustand der beiden Elemente die für die Feinzentrierung massgebenden Teile beider Elemente geschützt sind.

Dadurch kann bei der Bearbeitung der Werkstücke, beispielsweise beim Bohren, Fräsen, Drehen oder bei der Funkenerosion, die Gefahr einer Verschmutzung oder Beschädigung der für die Feinzentrierung massgebenden Teile beider Elemente nachhaltig reduziert werden.

In einer weiteren, bevorzugten Ausführungsform der Erfindung wird zudem vorgeschlagen, das Abstützorgan auf der Innenseite des die planen Anlageflächen überragenden Bereichs mit einem Dichtring zu versehen, der sich beim Zusammenfügen der beiden Elemente aussen am ortsfesten Kupplungselement anlegt. Eine auf diese Weise ausgebildete Aufspannvorrichtung ist selbst gegen Staub und Wasser unempfindlich.

Um das gegenseitige Ausrichten der beiden Kupplungselemente zu erleichtern, soll im weiteren die Grobzentrierung zwischen dem ortsfesten Kupplungselement und dem dem Werkzeug bzw. Werkstück zugeordneten Kupplungselement der Vorrichtung vereinfacht werden. Dazu wird bei einer Weiterbildung des Erfindungsgegenstandes vorgeschlagen, den Spannbolzen im Endbereich mit einer abgeschrägten bzw. halbkreisförmig ausgestalteten Zentrierfläche zu versehen, welche mit einem die zentrale Bohrung des einen Kupplungselements auf der Unterseite begrenzenden, ringförmigen Einsatz zusammenzuwirken bestimmt ist.

Eine weitere Aufgabe der Erfindung besteht darin, eine Einrichtung vorzuschlagen, welche sich insbesondere zum positionsdefinierten Aufspannen von grossen und schweren Werkzeugen oder Werkstücken eignet.

Zur Lösung dieser Aufgabe wird im Anspruch 21 eine Einrichtung vorgeschlagen, welche mit mehreren, erfindungsgemäss ausgestalteten Aufspannvorrichtungen versehen ist. Die Einrichtung besteht aus einer Werkstückaufnahme, an der mehrere Kupplungselemente angeordnet sind, wobei eine korrelierende Anzahl Kupplungselemente ortsfest und korrespondierend zu den dem Werkzeug bzw. Werkstück zugeordneten Kupplungselementen (1) angeordnet sind. Die Nuten und Zentrierzapfen der Aufspannvorrichtungen legen in ihrer Gesamtheit die definitive Lage der Werkstückaufnahme sowohl in X- und Y-Richtung wie auch bezüglich der Winkellage um eine definierte Z-Achse fest.

Mit Hilfe einer derartigen Einrichtung können selbst sehr grosse und schwere Werkstücke, die oft mit Hilfe eines Krans bewegt werden müssen, schnell und mühelos an den Bearbeitungsort bewegt und dort aufgespannt werden. Nach dem Bearbeiten kann die Werkstückaufnahme an praktisch jedem beliebigen Ort, beispielsweise am Boden, abgestellt werden, ohne dass dabei besondere Vorsichtsmassnahmen getroffen werden müssen, da die Werkstückaufnahme beim Abstellen auf den Abstützorganen der zugehörigen Kupplungselemente aufzustehen kommt, und daher eine Beschädigung und Verschmutzung der Feinzentrierelemente praktisch ausgeschlossen werden kann.

Im folgenden werden einige Ausführungsbeispiele der Erfindung anhand von Zeichnungen näher erläutert. In den Zeichnungen zeigen:
- Fig. 1: eine perspektivische Ansicht eines dem Werkzeug bzw. Werkstück zugeordneten Kupplungselements;
- Fig. 2: eine perspektivische Ansicht eines ortsfesten Kupplungselements;
- Fig. 3: einen Querschnitt durch die aus den beiden Kupplungselementen gemäss Fig. 1 und 2 bestehende Aufspannvorrichtung;
- Fig. 4: eine zweite Ausführungsform eines dem Werkzeug bzw. Werkstück zugeordneten Kupplungselements in einer perspektivische Ansicht;
- Fig. 5: eine schematische Seitenansicht einer alternativen Ausführungsform einer Aufspannvorrichtung;
- Fig. 6: eine schematische Seitenansicht einer weiteren, alternativen Ausführungsform einer Aufspannvorrichtung;
- Fig. 7: eine perspektivische Ansicht einer weiteren, alternativen Ausführungsform eines dem Werkzeug bzw. Werkstück zugeordneten Kupplungselements;
- Fig. 8: eine perspektivische Ansicht einer weiteren, alternativen Ausführungsform eines ortsfesten Kupplungselements;
- Fig. 9: eine Einrichtung zum positionsdefinierten Aufspannen von Werkstücken in einer Draufsicht, und
- Fig. 10: eine Seitenansicht der Einrichtung gemäss Fig. 9.

Der Einfachheit halber wird im folgenden das dem Werkzeug bzw. Werkstück zugeordnete Kupplungselement lediglich mit "Kupplungselement" bezeichnet, während für das ortsfest angeordnete Kupplungselement der Ausdruck "Spannelement" verwendet wird.

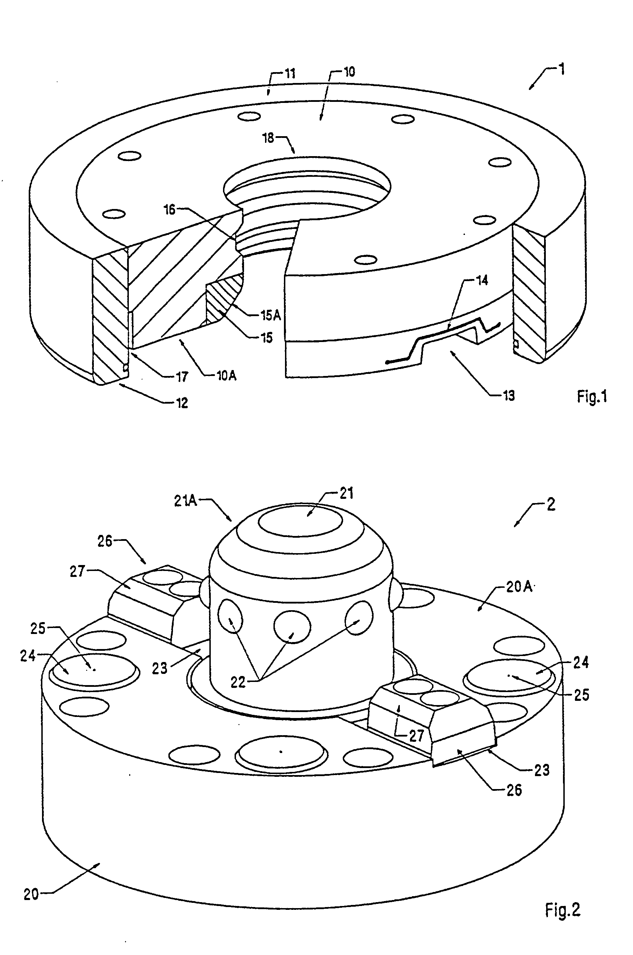

Die Fig. 1 zeigt eine perspektivische Ansicht des Kupplungselements 1 und Fig. 2 des Spannelements 2, wobei das Kupplungselement 1 in teilweise geschnittener Darstellung ersichtlich ist. Das Kupplungselement 1 bildet zusammen mit dem Spannelement 2 eine Aufspannvorrichtung. Im Normalfall wird das Kupplungselement 1 dem zu spannenden Werkzeug oder Werkstück zugewandt, währenddem das Spannelement 2 ortsfest, beispielsweise auf dem Bearbeitungstisch einer Werkzeugmaschine, befestigt wird.

Das Kupplungselement 1 weist einen Grundkörper 10 auf, der von einem Abstützorgan 11 umfasst wird. Das Abstützorgan 11 überragt den Grundkörper 10 auf der Unterseite 10A und ist mit einer endseitigen Abstützfläche 12 versehen. Auf der Oberseite schliesst das Abstützorgan 11 bündig mit der planen Oberfläche des Grundkörpers 10 ab.

In den Grundkörper 10 ist eine zentralen Bohrung 18 eingelassen, welche auf der Unterseite durch einen ringförmigen Einsatz 15 begrenzt wird. Dieser ringförmige Einsatz 15 weist eine abgeschrägte Zentrierfläche 15A auf. Der Einsatz 15 ist vorzugsweise auswechselbar am Grundkörper 10 befestigt, indem er beispielsweise mittels Schrauben (nicht eingezeichnet) fixiert ist. Innerhalb der zentralen Bohrung 18 ist eine Vertiefung 16 vorgesehen, in welcher Spannkugeln des Spannelements verankerbar sind. In die plane Unterseite 10A des Grundkörpers 10 sind Einschnitte in Form von Nuten 13 eingelassen, welche in bekannter Weise mit am Spannelement angeordneten Zentrierzapfen zusammenzuwirken bestimmt sind. Je nach Ausführungsform sind zwei einander gegenüberliegende oder vier exzentrisch und winkelmässig zueinander versetzte Nuten 13 vorgesehen. Hinter jeder Nut 13 ist zudem ein Einschnitt 14 vorgesehen, dessen nähere Bedeutung anschliessend noch erläutert wird.

In die Unterseite 10A des Grundkörpers 10 ist eine runde Ausnehmung 17 eingelassen, welche sich an die Innenseite des Abstützorgans 11 anschliesst. Die Nuten 13 zusammen mit der planen Unterseite 10A des Grundkörpers 10 bilden die für die Feinzentrierung wesentlichen Organe des Kupplungselements 1, währenddem für die Grobzentrierung der ringförmigen Einsatz 15 vorgesehen ist. Die für die Feinzentrierung wesentlichen Organe 10A, 13 werden durch das nach unten vorstehende Abstützorgan 11 weitestgehend vor Beschädigung geschützt.

Das Spannelement 2 umfasst einen Grundkörper 20, an dem ein Spannbolzen 21 befestigt ist. Die freie Endfläche 21A des Spannbolzens 21 ist als Zentrierfläche ausgebildet, indem diese abgeschrägt bis halbkreisförmig ausgestaltet ist und sich über zumindest einen Drittel des Querschnitts des Spannbolzens 21 erstreckt. Aus der planen Oberseite 20A des Grundkörpers 20 stehen vier Anschlagflächen 24 sowie zwei Zentrierkörper 26 vor, wobei aus dieser Darstellung nur drei von vier Anlageflächen 24 sichtbar sind. Im Zentrum der Anlageflächen 24 münden Bohrungen 25 nach aussen. Über diese Bohrungen 25 kann Druckluft ausströmen, durch welche die beim Spannvorgang aneinander zu liegen kommenden Flächen gereinigt werden. Die Zentrierzapfen 26 können mittels Schrauben in Nuten 23 des Grundkörpers 20 befestigt sein und weisen als Anlageflächen ausgebildete Fasen 27 auf. Die Zentrierzapfen 26 zusammen mit den Anlageflächen 24 bilden die für die Feinzentrierung wesentlichen Organe des Spannelements 2, währenddem für die Grobzentrierung die freie Endfläche 21A des Spannbolzens 21 vorgesehen ist. Zum gegenseitigen Fixieren des Kupplungs- und des Spannelements weist der Spannbolzen 21 eine Vielzahl von Spannkugeln 22 auf, welche sich beim Spannen an der Wandung der korrespondierenden Vertiefung 16 des Kupplungselements 1 (Fig. 1) anlegen.

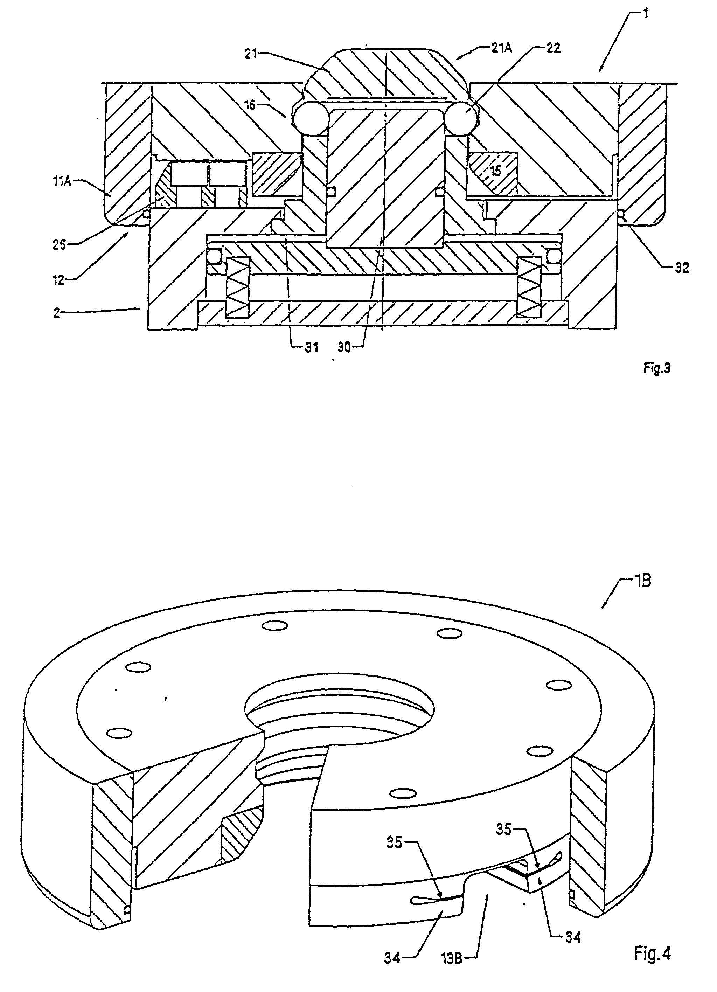

Fig. 3 zeigt einen Querschnitt durch das Spannelement 2 und das Zentrierelement 1 in einer Momentaufnahme während des Spannvorgangs. Das Zusammenfügen der beiden Elemente 1, 2 wird durch die aus dem ringförmigen Einsatz 15 und der abgeschrägten Endfläche 21A des Spannbolzens 21 gebildeten Grobzentriermittel erleichtert. Der ringförmigen Einsatz 15 ist vorzugsweise aus einem Material gefertigt, das weicher ist als der Spannbolzen 21, wodurch eine Beschädigung des letzteren beim Zentrieren weitgehend vermieden wird. Als Materialien für den ringförmigen Einsatz 15 kommen beispielsweise Messing und Bronze, aber auch geeignete Kunststoffe in Frage.

Nach der Grob- erfolgt die Feinzentrierung, indem die Zentrierzapfen 26 in bekannter Weise auf die Nuten 13 ausgerichtet werden. Sobald die Zentrierzapfen 26 mit den Nuten 13 fluchten, greifen die Zentrierzapfen 26 im wesentlichen kräftelos in die Nuten 13 ein. Damit ist die gegenseitige Positionierung der beiden Elemente 1 und 2 in X- und Y-Richtung sowie bezüglich der Winkellage abgeschlossen.

Nunmehr erfolgt das gegenseitige Verspannen der beiden Elemente 1 und 2, indem sich die Spannkugeln 22 an die Wand der Vertiefung 16 des Kupplungselements 1 anlegen. Im Innern des Spannbolzens 21 ist ein verschiebbarer Kolben 30 angeordnet, der die Spannkugeln 22 nach aussen drückt, da er in Richtung der freien Endfläche des Spannbolzens 21 federbelastet ist. Dieser Kolben 30 kann pneumatisch entgegen der Federvorspannung nach unten verschoben werden, so dass die Spannkugeln 22 entlastet und die beiden Elemente 1, 2 wieder getrennt werden können. Im hier dargestellten Ruhezustand verharrt der Kolben 30 in der oberen Position und drückt die Spannkugeln 22 in die Vertiefung 16, wodurch die beiden Elemente 1, 2 gegeneinander verriegelt sind. Zum Verschieben des Kolbens 30, und damit zum Lösen der Spannkugeln, wird ein Druckraum 31 mit unter Überdruck stehender Luft beaufschlagt. Natürlich ist es auch möglich, das Spannelement 2 derart auszubilden, dass der Kolben 30 pneumatisch in der entgegengesetzten Richtung verschoben werden kann. Dies könnte entweder zusätzlich zur Federkraft oder anstelle derselben erfolgen. Auf diese Weise ist zudem auch möglich, die beiden Elemente pneumatisch zu Spannen und zu Verriegeln.

Um das Kupplungselement 1 gegenüber dem Spannelement 2 in Z-Richtung in eine definierte Lage zu bringen, wird das Kupplungselement 1 beim eigentlichen Spannvorgang entgegen einer Federkraft des durch die Hinterschneidung 14 der Nut 13 gebildeten Federelements in Z-Richtung soweit verschoben, bis das Kupplungselement 1 mit seiner planen Unterseite 10A an den Anschlagflächen 24 des Spannelements 2 (Fig. 1, 2) zur Anlage kommt.

Dadurch, dass das Abstützorgan 11 die für die Feinzentrierung wesentlichen Organe 10A, 13, 14 des Kupplungselements 1 (Fig. 1) um mehr als den Betrag der Überhöhung der Anschlagflächen 24 überragt, wird die Oberseite des Spannelements 2 vom Abstützorgan 11 umschlossen. Durch einen an der Innenseite des Abstützorgans 11 angebrachten Dichtring 32 sind alle für eine einwandfreie Zentrier- und Spannfunktion wesentlichen Teile 10A, 13, 14, 21, 22, 24, 26 der beiden Elemente zuverlässig vor eindringendem Schmutz geschützt.

Anstelle der in Fig. 3 gezeigten Anordnung eines Dichtrings, kann es sinnvoll sein, das Abstützorgan auf der Innenseite mit einer abgeschrägten Endfläche zu versehen, in welche eine unter einem Winkel zu den Auflageflächen verlaufende Nut eingelassen ist, in der ein Dichtring aufgenommen ist. Vorteilhafterweise ist das ortsfeste Spannelement in dem mit dem Dichtring korrespondierenden Bereich mit einer umlaufenden Kante versehen, an der sich der Dichtring anlegen kann. Durch diese Ausbildungsform können die durch den Dichtring auf das Kupplungselement ausgeübten Kräfte klein gehalten werden, so dass vom Dichtring keine nennenswerte Beeinflussung des Zentriervorgangs ausgeht.

Fig. 4 zeigt eine zweite Ausführungsform eines Kupplungselements 1B in einer perspektivischen Ansicht und in teilweise geschnittener Darstellung. Anstelle einer hinter der jeweiligen Nut angeordneten Hinterschneidung sind bei diesem Kupplungselement 1B pro Nut 13B zwei federnde Lippen 34 vorgesehen, welche durch je einen parallel zur planen Unterseite des Kupplungselements verlaufenden Einschnitt 35 gebildet werden. Durch derart ausgebildete Lippen 34 wird der gleiche Effekt wie durch eine Hinterschneidung erzielt, indem die Anlageflächen des Spannelements an den Auflageflächen des Kupplungselemente, nach dem Feinzentrieren, der beiden Elemente, entgegen der Federkraft der Lippen 34, zur Anlage gebracht werden können.

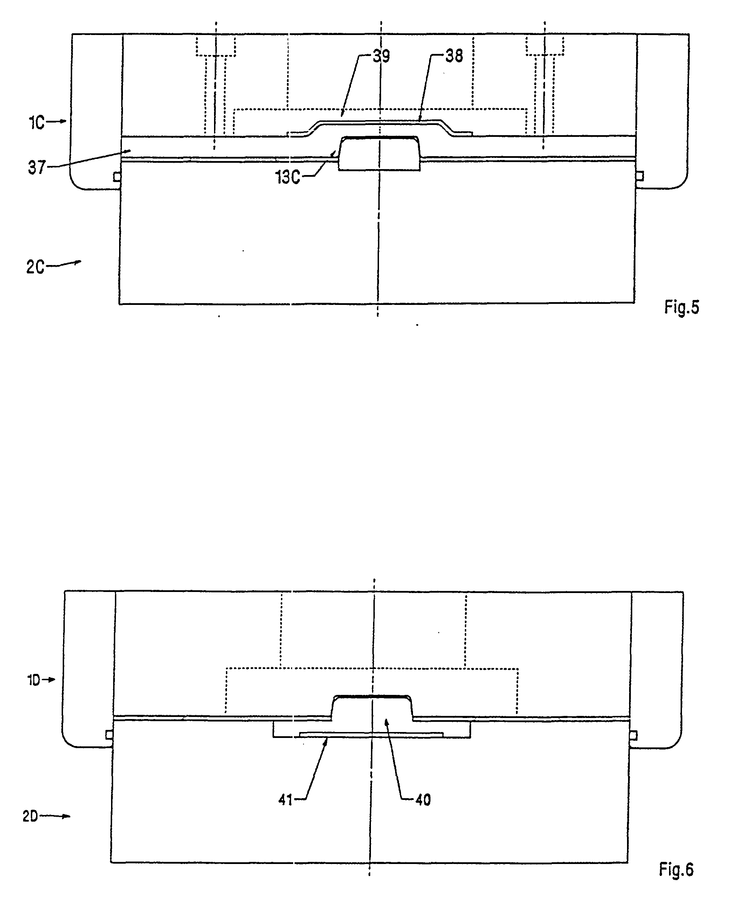

In der Fig. 5 ist eine Teilansicht einer weiteren, alternativen Ausführungsform eines Kupplungselements 1C dargestellt, welches mit einer Federscheibe 37 versehen ist. Das Spannelement 2C entspricht dabei dem vorgängig erläuterten. Die Federscheibe 37 ist auf der Unterseite des Kupplungselements 1C angeordnet und ersetzt die in Fig. 1 dargestellte Hinterschneidung 14 der Nuten 13, da die Federwirkung im vorliegenden Fall von der Federscheibe 37 übernommen wird. Im Bereich der Nuten 13C ist die Federscheibe 37 verstärkt ausgebildet. Um eine Auslenkung der Federscheibe 37 im Bereich der Nuten 13C zuzulassen, ist der Grundkörper des Kupplungselements im Bereich der Nuten 13C mit einer Ausnehmung 39 versehen, die etwas tiefer ist als die durch die Verstärkung entstehende Überhöhung der Federscheibe 37. Dadurch verbleibt zwischen der Federscheibe 37 und der Ausnehmung 39 ein Spalt 38, der eine gewisse Durchbiegung der Federscheibe 37 erlaubt. Anstelle von Nuten können ebenso die Federscheibe durchsetzende Öffnungen vorgesehen werden.

Fig. 6 zeigt eine Teilansicht einer alternativen Ausführungsform eines Spannelements 2D. Anstelle von Nuten, die mit einer Hinterschneidung versehen bzw. in einer Federscheibe angeordnet sind, sind im vorliegenden Fall die Zentrierzapfen 40 federnd angeordnet. Dazu ist eine hinter dem jeweiligen Zentrierzapfen 40 angeordnete Ausnehmung 41 vorgesehen. Anstelle einer Ausnehmung 41 könnten die Zentrierzapfen 40 natürlich auch federnd abgestützt werden, indem diese beispielsweise an einer Federscheibe angeordnet würden. Bei einer federnden Anordnung der Zentrierzapfen 40 könnten die korrespondierenden Nuten starr ausgebildet werden bzw. in einem starren Bereich des Zentrierelements 1D angebracht werden.

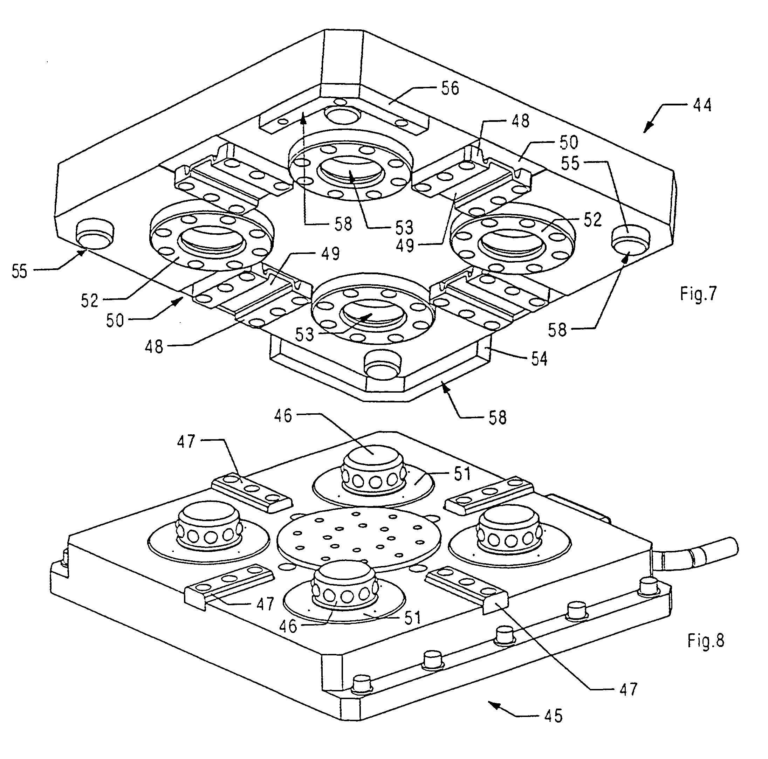

Die Figuren 7 und 8 zeigen in perspektivischer Ansicht eine weitere, alternative Ausführungsform einer Aufspannvorrichtung, welche sich ebenfalls aus einem, dem Werkstück zuzuordnenden Kupplungselement 44 und einem ortsfest anzuordnenden Spannelement 45 zusammensetzt. Diese Aufspannvorrichtung eignet sich insbesondere auch für grosse und schwere Werkstücke. Um eine hohe und gleichmässig wirkende Spannkraft aufbringen zu können, ist das ortsfeste Spannelement 45 mit vier Spannbolzen 46 versehen, welche von je einer Anschlagfläche 51 umgeben sind. Diese Anschlagflächen 51 sind gegenüber der Oberfläche des Spannelements 45 um einige Millimeter erhöht. Zwischen zwei Spannbolzen 46 ist jeweils ein Zentrierzapfen 47 angeordnet. Jeder der vier Zentrierzapfen 47 ist in einer in die plane Oberfläche des Spannelements 45 eingelassenen Ausnehmung aufgenommen.

Das Kupplungselement 44 weist vier ringförmig ausgebildete Auflageflächen 52 auf, in deren Zentrum jeweils eine mit einem Spannbolzen korrespondierende Bohrung 53 vorgesehen ist. Die für die Feinzentrierung notwendigen Nuten 49 sind in diskrete Federelemente 48 eingelassen, welch letztere formschlüssig in Ausnehmungen 50 im Kupplungselement 44 eingesetzt sind. Derartig ausgebildete Federelemente 48 sind in der Lage grosse Querkräfte aufzunehmen.

Durch die gezeigte Anordnung der Feinzentrierorgane -Federelemente 48 mit Nuten 49 sowie Zentrierzapfen 47- der Aufspannvorrichtung wird die definitive Lage des Kupplungselements 44 sowohl in X- und Y-Richtung wie auch bezüglich der Winkellage um eine definierte Z-Achse festgelegt.

Am Kupplungselement 44 sind andeutungsweise drei Varianten von Abstützorganen eingezeichnet. Die eine Variante sieht eine aussen umlaufende Leiste 54 vor, welche mit der Aussenkontur des Spannelements 45 korrespondiert und dieses im gespannten Zustand umfasst. Die Höhe des Abstützorgans 54 ist dabei so gewählt, dass die für die Feinzentrierung wesentlichen Teile 48, 49, 52 um mehr als den Betrag der Überhöhung der vorstehenden Anschlagflächen 51 des Kupplungselements 45 überragt werden.

Eine andere Variante besteht darin, eine Leiste 56 an der Unterseite des Kupplungselements 44 vorzusehen. In diesem Fall muss die Höhe der Leiste 56 so gewählt werden, dass die für die Feinzentrierung wesentlichen Teile 48, 49, 52 um weniger als den Betrag der Überhöhung der vorstehenden Anschlagflächen 51 des Kupplungselements 45 überragt werden. Dadurch ist gewährleistet, dass sich die Auflagefläche 52 definiert an der Anschlagfläche 51 anlegt.

Schliesslich können als Abstützorgane auch Pfosten 55 vorgesehen werden, die in den Ecken angeordnet sind. Auch in diesem Fall muss die Höhe der Pfosten 55 so gewählt werden, dass die für die Feinzentrierung wesentlichen Teile 48, 49, 52 um weniger als den Betrag der Überhöhung der vorstehenden Anschlagflächen 51 des Kupplungselements 45 überragt werden.

Anstelle der gezeigten vier Spannzapfen 46 kann natürlich auch eine noch grössere Anzahl von Spannzapfen, beispielsweise sechs, vorgesehen werden. Ebenso ist es denkbar, die Anzahl der Zentrierzapfen 47 zusammen mit der korrespondierenden Anzahl Nuten 49 den Anforderungen entsprechend zu erhöhen.

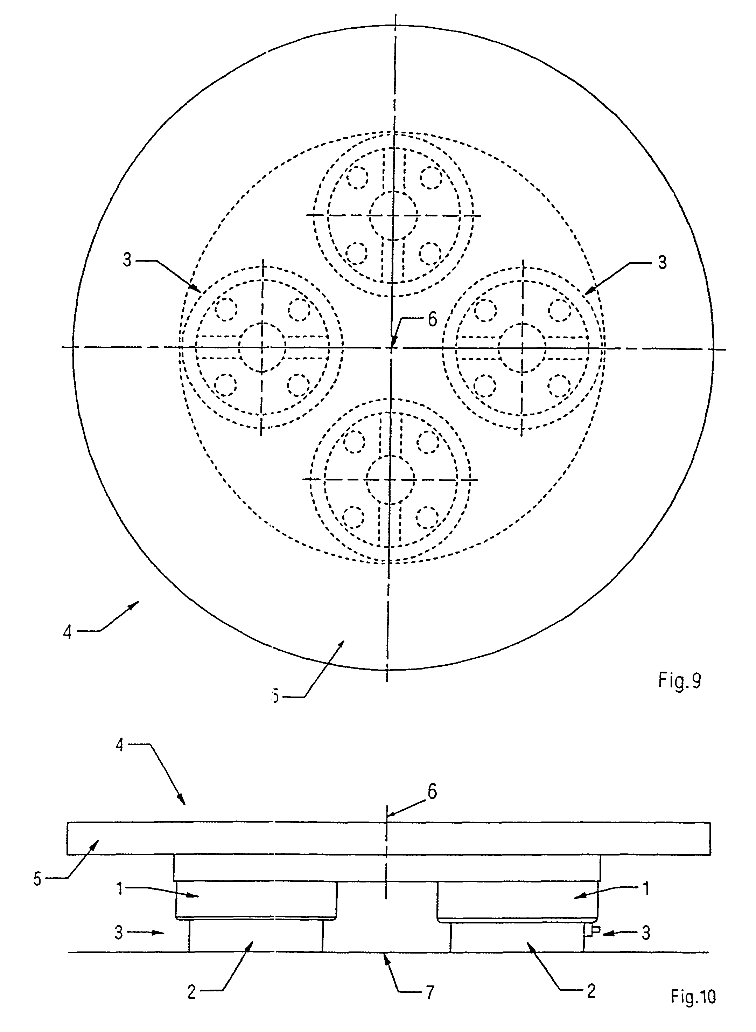

Fig. 9 zeigt eine Einrichtung zum positionsdefinierten Aufspannen von Werkstücken in einer schematischen Draufsicht und Fig. 10 in einer schematischen Seitenansicht. Diese Einrichtung weist vier Aufspannvorrichtungen 3 sowie eine Werkstückaufnahme 4 auf. Die Werkstückaufnahme 4 besteht aus einer runden Plattform 5, an deren Unterseite vier Kupplungselemente 1 fixiert sind, welche symmetrisch zur Mittelachse 6 der Plattform 5 angeordnet sind. Auf der Plattform 5 wird das zu bearbeitende Werkstück (nicht eingezeichnet) befestigt, wobei anstelle einer Plattform eine beliebig andere Werkstückaufnahme, beispielsweise ein Spannrahmen, vorgesehen werden kann.

Die vier Spannelemente 2 der Aufspannvorrichtungen 3 sind ortsfest angeordnet, beispielsweise auf dem Bearbeitungstisch 7 einer Werkzeugmaschine. Jede der vier Aufspannvorrichtungen 3 ist mit zwei Zentrierzapfen und zwei korrespondierenden Nuten versehen, welche Zentrierorgane in ihrer Gesamtheit die definitive Lage der Werkstückaufnahme 4 sowohl in X- und Y-Richtung wie auch bezüglich der Winkellage um die Z-Achse festlegen.

Anstelle der hier dargestellten, runden Werkstückaufnahme 4, sind natürlich auch beliebig andere Ausführungen von Werkstückaufnahmen, beispielsweise rechteckige denkbar. Bei rechteckigen Werkstückaufnahmen ist es von Vorteil, die eine der Aufspannvorrichtungen mit vier Nuten und Zentrierzapfen zu versehen. Durch diese Aufspannvorrichtung wird die Lage der Werkstückaufnahme in X- und Y-Richtung und damit die Referenz der Z-Achse festgelegt. Zusätzlich muss zumindest eine weitere im Abstand von der ersten Aufspannvorrichtung angeordnete, zweite Aufspannvorrichtung vorgesehen werden, die die Lage der Werkstückaufnahme nur bezüglich der Winkellage um die Z-Achse festlegt. Dazu ist eine vorzugsweise zwei Nuten und zwei Zentrierzapfen aufweisende Aufspannvorrichtung vorgesehen, welche Längenänderungen der Werkstückaufnahme in der einen Richtung zulässt. Dies erlaubt auch unter ungünstigen Bedingungen, beispielsweise unter dem Einfluss thermisch bedingter Abmessungsänderungen der Werkstückaufnahme, eine hohe Positioniergenauigkeit des aufgespannten Werkstücks.

Anstelle der vorgängig erläuterten Aufspannvorrichtungen kann die Einrichtung natürlich auch mit Aufspannvorrichtungen gemäss den Fig. 7 und 8 versehen werden.

Der Vorteil, eine Werkstückaufnahme mit erfindungsgemäss ausgestalteten Aufspannvorrichtungen auszurüsten, ist insbesondere darin zu sehen, dass diese sehr robust und unempfindlich in der Handhabung ist. Beim Abstellen einer solchen Werkstückaufnahme werden die für die Feinzentrierung massgebenden Teile des dem Werkstück zugeordneten Kupplungselements in keinster Weise beeinträchtigt, da das Abstützorgan die für die Feinzentrierung massgebenden Organe des Kupplungselements überragt und daher nur dessen Abstützfläche mit der Unterlage in Berührung kommt.

## Patentansprüche

1. Aufspannvorrichtung für ein Werkzeug oder Werkstück, mit einem ortsfest anzuordnenden, ersten Kupplungselement (2, 45) und einem dem zu spannenden Werkzeug bzw. Werkstück zugeordneten, vom ersten Kupplungselement trennbaren, zweiten Kupplungselement (1, 44), wobei zur Feinpositionierung einerseits eines der beiden Kupplungselemente (1, 44) mit Nuten (13, 49) versehen ist, die zur Bestimmung der Lage in X- und/oder Y-Richtung mit am anderen Kupplungselement (2, 45) angeordneten Zentrierzapfen (26, 47) zusammenzuwirken bestimmt sind, und andererseits eines der beiden Kupplungselemente (2, 45) vorstehende Anschlagflächen (24, 51) und das andere Kupplungselement (1, 44) plane Auflageflächen (10A, 52) aufweist, welch letztere nach erfolgtem Spannen an den Anschlagflächen (24, 51) zur Anlage kommen und damit die gegenseitige Lage der beiden Kupplungselemente (1, 2, 44, 45) in Z-Richtung bestimmen, und wobei zumindest ein Spannbolzen (21, 46) zur gegenseitigen Verriegelung der beiden Kupplungselemente (1, 2, 44, 45) vorgesehen ist, **dadurch gekennzeichnet, dass** der/die Spannbolzen (21, 46) am ortsfesten Kupplungselement (2, 45) angeordnet ist/sind und das dem Werkzeug bzw. Werkstück zugeordnete Kupplungselement (1, 44) ein mit einer endseitigen Abstützfläche (12, 58) versehenes Abstützorgan (11, 54, 55, 56) aufweist, welches die an diesem Kupplungselement (1, 44) vorgesehenen, für die Feinpositionierung wesentlichen Teile (10A, 13, 14, 48, 49, 52) überragt und wobei das Abstützorgan (11) auf der Innenseite mit einem Dichtring (32) versehen ist, der sich beim Zusammenfügen der beiden Kupplungselemente (1, 2) aussen am ortsfesten Kupplungselement (2) anlegt.

2. Aufspannvorrichtung nach Anspruch 1, **dadurch gekennzeichnet, dass** die Innenseite des Abstützorgans (11) mit der Aussenkontur des ortsfesten Kupplungselements (2) korrespondiert, und dass das Abstützorgan (11) die für die Feinzentrierung wesentlichen Teile (10A, 13, 14) des dem Werkzeug bzw. Werkstück zugeordneten Kupplungselements (1) um mehr als den Betrag der Überhöhung der vorstehenden Anschlagflächen (24) des ortsfesten Kupplungselements (2) überragt.

3. Aufspannvorrichtung nach Anspruch 1 oder 2, **dadurch gekennzeichnet, dass** sowohl das dem Werkzeug bzw. Werkstück zugeordnete Kupplungselement (1) wie auch das ortsfeste Kupplungselement (2) im wesentlichen zylindrisch ausgebildet sind, wobei das Abstützorgan (11) das ortsfeste Kupplungselement (2) ringförmig zu umfassen bestimmt ist, indem der Innendurchmesser des Abstützorgans (11) zumindest annähernd dem Aussendurchmesser des ortsfesten Kupplungselements (2) entspricht.

4. Aufspannvorrichtung nach einem der vorhergehenden Ansprüche, **dadurch gekennzeichnet, dass** das Abstützorgan auf der Innenseite eine abgeschrägte Endfläche aufweist, welche mit einer unter einem Winkel zu den Auflageflächen verlaufenden Nut versehen ist, in der der Dichtring aufgenommen ist.

5. Aufspannvorrichtung nach einem der vorhergehenden Ansprüche, **dadurch gekennzeichnet, dass** das dem Werkzeug bzw. Werkstück zugeordnete Kupplungselement (1) mit einer zentralen Bohrung (18) versehen ist, in welcher der Spannbolzen (21) des ortsfesten Kupplungselements (2) verankerbar ist, und dass der Spannbolzen (21) zusammen mit der Bohrung (18) des dem Werkzeug bzw. Werkstück zugeordneten Kupplungselements (1) als Grob-Zentrierelement ausgebildet ist, indem der Spannbolzen (21) im Endbereich mit einer abgeschrägten bzw. halbkreisförmig ausgestalteten Zentrierfläche (21A) versehen ist, welche mit einem die zentrale Bohrung (18) des dem Werkzeug bzw. Werkstück zugeordneten Kupplungselements (1) auf der Unterseite begrenzenden, ringförmigen Einsatz (15) zusammenzuwirken bestimmt ist.

6. Aufspannvorrichtung nach Anspruch 5, **dadurch gekennzeichnet, dass** der die Bohrung (18) des dem Werkzeug bzw. Werkstück zugeordneten Kupplungselements (1) begrenzende, ringförmige Einsatz (15) eine abgeschrägte Zentrierfläche (15A) aufweist, wobei der ringförmige Einsatz (15) auswechselbar befestigt ist und aus einem Material besteht, das weicher ist als der Spannbolzen (21).

7. Aufspannvorrichtung nach Anspruch 5 oder 6, **dadurch gekennzeichnet, dass** sich die Zentrierfläche (21A) des Spannbolzens (21) über zumindest einen Drittel dessen freier Endfläche erstreckt.

8. Aufspannvorrichtung nach einem der vorhergehenden Ansprüche, **dadurch gekennzeichnet, dass** hinter und/oder seitlich der jeweiligen Nut (13) des dem Werkzeug bzw. Werkstück zugeordneten Kupplungselements (1) ein oder mehrere Einschnitt(e) (14) vorgesehen ist/sind, der/die derart ausgebildet ist/sind, dass den in die jeweilige Nut (13) eindringenden Zentrierzapfen (27), beim Spannvorgang in Z-Richtung, eine Federkraft gegenübersteht, nach deren Überwindung die planen Anlageflächen (10A) des einen Kupplungselements (1) an den Anschlagflächen (24) des anderen Kupplungselements (2) zur Anlage kommen.

9. Aufspannvorrichtung nach einem der Ansprüche 1 bis 7, **dadurch gekennzeichnet, dass** hinter und/oder seitlich des jeweiligen Zentrierzapfens (40) ein oder mehrere Einschnitt(e) (41) vorgesehen ist/sind, der/die derart ausgebildet ist/sind, dass den in die jeweilige Nut (13) eindringenden Zentrierzapfen (27), beim Spannvorgang in Z-Richtung, eine Federkraft gegenüber steht, nach deren Überwindung die planen Anlageflächen (10A) des einen Elements (1) an den Auflageflächen (24) des anderen Elements (2) zur Anlage kommen.

10. Aufspannvorrichtung nach einem der Ansprüche 1 bis 7, **dadurch gekennzeichnet, dass** eine Federscheibe (37) vorgesehen ist, in welche die Nuten (13C) eingelassen sind.

11. Aufspannvorrichtung nach einem der Ansprüche 1 bis 7, **dadurch gekennzeichnet, dass** die Zentrierzapfen an einer Federscheibe angeordnet sind.

12. Aufspannvorrichtung nach einem der vorhergehenden Ansprüche, **dadurch gekennzeichnet, dass** das dem Werkzeug bzw. Werkstück zugeordnete Kupplungselement (1) mit einer auf der Innenseite an den Abstützteil (11) angrenzenden, nutförmigen Ausnehmung (17) versehen ist.

13. Aufspannvorrichtung nach einem der vorhergehenden Ansprüche, **dadurch gekennzeichnet, dass** der Spannbolzen (21) eine Vielzahl von Spannkugeln (22) aufweist, welche sich beim Spannen an der Wandung einer korrespondierenden Vertiefung (16) des dem Werkzeug bzw. Werkstück zugeordneten Kupplungselements (1) anlegen.

14. Aufspannvorrichtung nach Anspruch 13, **dadurch gekennzeichnet, dass** die Spannkugeln (22) im Ruhezustand durch ein federbelastetes, im Innern des Spannbolzens (21) verschiebbar angeordnetes Betätigungsorgan (30) nach aussen gedrückt werden, wobei das federbelastete Betätigungsorgan (30) pneumatisch entgegen der Federvorspannung derart verschiebbar ist, dass die Spannkugeln (22) entlastet werden.

15. Aufspannvorrichtung nach Anspruch 1, **dadurch gekennzeichnet, dass** das zweite, dem zu spannenden Werkzeug bzw. Werkstück zugeordnete Kupplungselement (44) zumindest vier Spannbolzen (46) sowie zumindest vier Zentrierzapfen (47) und das erste, ortsfeste Kupplungselement (45) eine mit der Anzahl der Zentrierzapfen (47) korrespondierende Anzahl Nuten (49) aufweist, wobei die Nuten (49) und Zentrierzapfen (47) der Aufspannvorrichtung in ihrer Gesamtheit die definitive Lage des zweiten Kupplungselements (44) sowohl in X- und Y-Richtung wie auch bezüglich der Winkellage um eine definierte Z-Achse festlegen.

16. Aufspannvorrichtung nach Anspruch 15, **dadurch gekennzeichnet, dass** das Abstützorgan als umlaufende Leiste (54) ausgebildet ist, deren Innenseite mit der Aussenkontur des ersten, ortsfesten Kupplungselements (45) korrespondiert, wobei das Abstützorgan (54) die für die Feinzentrierung wesentlichen Teile (48, 49, 52) des zweiten Kupplungselements (44) um mehr als den Betrag der Überhöhung der vorstehenden Anschlagflächen (51) des ersten Kupplungselements (45) überragt.

17. Aufspannvorrichtung nach Anspruch 15, **dadurch gekennzeichnet, dass** an der Unterseite des zweiten Kupplungselements (44) zumindest ein Abstützorgan (55, 56) angeordnet ist, welches bzw. welche die für die Feinzentrierung wesentlichen Teile (48, 49, 52) des zweiten Kupplungselements (44) um weniger als den Betrag der Überhöhung der vorstehenden Anschlagflächen (51) des ersten Kupplungselements (45) überragt/überragen.

18. Aufspannvorrichtung nach einem der Ansprüche 15 bis 17, **dadurch gekennzeichnet, dass** vier Spannbolzen (46) vorgesehen sind, wobei jeweils zwischen zwei Spannbolzen (46) ein Zentrierzapfen (47) angeordnet ist

19. Aufspannvorrichtung nach einem der Ansprüche 15 bis 18, **dadurch gekennzeichnet, dass** diskrete Federelemente (48) vorgesehen sind, in welche die für die Feinpositionierung vorgesehenen Nuten (49) eingelassen sind, wobei die Federelemente (48) formschlüssig in Ausnehmungen (50) im zweiten, dem Werkzeug oder Werkstück zugeordneten Kupplungselement (44) eingesetzt sind.

20. Aufspannvorrichtung nach einem der Ansprüche 15 bis 19, **dadurch gekennzeichnet, dass** die für die Feinpositionierung vorgesehenen Zentrierzapfen (47) als diskrete Elemente ausgebildet und in Ausnehmungen des ersten, ortsfesten Kupplungselements (45) eingesetzt sind.

21. Einrichtung zum positionsdefinierten Aufspannen von Werkstücken, welche mit mehreren Aufspannvorrichtungen (3) nach einem oder mehreren der Ansprüche 1 bis 20 versehen ist, mit einer Werkstückaufnahme (4), an der mehrere Kupplungselemente (1) angeordnet sind, welche letztere mit einer korrespondierenden Anzahl von ortsfest angeordneten Kupplungselementen (2) zusammenzuwirken bestimmt sind, wobei die Nuten und Zentrierzapfen der Aufspannvorrichtungen (3) in ihrer Gesamtheit die definitive Lage der Werkstückaufnahme (4) sowohl in X- und Y-Richtung wie auch bezüglich der Winkellage um eine definierte Z-Achse festlegen.

22. Einrichtung nach Anspruch 21, **dadurch gekennzeichnet, dass** eine erste Aufspannvorrichtung vorgesehen ist, welche ein dem Werkzeug bzw. Werkstück zugeordnetes Kupplungselement und ein ortsfestes Kupplungselement umfasst, wobei die Aufspannvorrichtung mit vier Nuten und Zentrierzapfen versehen ist, welche Feinzentrierorgane zusammen die Lage der Werkstückaufnahme in X- und Y-Richtung und damit die Referenz der Z-Achse festlegen, und wobei zumindest eine weitere im Abstand von der ersten Aufspannvorrichtung angeordnete, Aufspannvorrichtung vorgesehen ist, die mit zwei Nuten und zwei Zentrierzapfen versehen ist, welche Feinzentrierorgane die Lage der Werkstückaufnahme nur bezüglich der Winkellage um die Z-Achse festlegen.

23. Einrichtung nach Anspruch 21, **dadurch gekennzeichnet, dass** die Werkstückaufnahme (4) rund ausgebildet und mit vier Aufspannvorrichtungen (3) versehen ist, welche je mit zwei Nuten und zwei Zentrierzapfen versehen sind, wobei die dem Werkzeug bzw. Werkstück zugeordneten Kupplungselemente (1) symmetrisch zur Mittelachse (6) der Werkstückaufnahme (4) an letzterer angeordnet und winkelmässig zueinander versetzt sind.

## Claims

1. Clamping device for a tool or workpiece, having a first coupling element (2, 45) which is to be fixedly arranged, and a second coupling element (1, 44) which is assigned to the tool or workpiece which is to be clamped and can be disconnected from the first coupling element, in which, for the purpose of fine positioning, on the one hand one of the two coupling elements (1, 44) is provided with grooves (13, 49) which are intended to interact with centring pins (26, 47) arranged on the other coupling element (2, 45) in order to determine the position in the X direction and/or the Y direction, and on the other hand one of the two coupling elements (2, 45) has protruding stop faces (24, 51) and the other coupling element (1, 44) has planar bearing faces (10A, 52) which come to bear on the stop faces (24, 51) after clamping has taken place, and thus determine the position of the two coupling elements (1, 2, 44, 45) with respect to one another in the Z direction, and in which at least one clamping bolt (21, 46) is provided for locking the two coupling elements (1, 2, 44, 45) to one another, **characterized in that** the clamping bolt/s (21, 46) is/are arranged on the fixed coupling element (2, 45) and the coupling element (1, 44) which is assigned to the tool or workpiece has a supporting element (11, 54, 55, 56) which is provided with an end-side supporting face (12, 58) and which projects beyond the parts (10A, 13, 14, 48, 49, 52) which are provided on this coupling element (1, 44) and are essential for the fine positioning, and the supporting element (11) being provided on the inside with a sealing ring (32) which bears against the outside of the fixed coupling element (2) when the two coupling elements (1, 2) are joined.

2. Clamping device according to Claim 1, **characterized in that** the inside of the supporting element (11) corresponds to the external contour of the fixed coupling element (2), and **in that** the supporting element (11) projects beyond those parts (10A, 13, 14) of the coupling element (1) assigned to the tool or workpiece which are essential for fine centring by more than the amount of super elevation of the protruding stop faces (24) of the fixed coupling element (2).

3. Clamping device according to Claim 1 or 2, **characterized in that** both the coupling element (1) assigned to the tool or workpiece and the fixed coupling element (2) are of essentially cylindrical design, the supporting element (11) being intended for engaging around the fixed coupling element (2) in an annular shape **in that** the internal diameter of the supporting element (11) corresponds at least approximately to the external diameter of the fixed coupling element (2).

4. Clamping device according to one of the preceding claims, **characterized in that** the supporting element has on the inside a bevelled end face which is provided with a groove which extends at an angle to the bearing faces and in which the sealing ring is accommodated.

5. Clamping device according to one of the preceding claims, **characterized in that** the coupling element (1) which is assigned to the tool or workpiece is provided with a central drilled hole (18) in which the clamping bolt (21) of the fixed coupling element (2) can be anchored, and **in that** the clamping bolt (21) is formed, together with the drilled hole (18) of the coupling element (1) which is assigned to the tool or workpiece, as a coarse centring element **in that** the clamping bolt (21) is provided in the end region with a centring face (21A) which is bevelled or semicircular in shape and which is intended to interact with an annular insert (15) which bounds, on the underside, the central drilled hole (18) of the coupling element (1) assigned to the tool or workpiece.

6. Clamping device according to Claim 5, **characterized in that** the annular insert (15) which bounds the drilled hole (18) of the coupling element (1) which is assigned to the tool or workpiece has a bevelled centring face (15A), the annular insert (15) being attached in an exchangeable fashion and being composed of material which is softer than the clamping bolt (21).

7. Clamping device according to Claim 5 or 6, **characterized in that** the centring face (21A) of the clamping bolt (21) extends over at least a third of the free end face thereof.

8. Clamping device according to one of the preceding claims, **characterized in that** one or more indents (14) is/are provided behind and/or to the side of the respective groove (13) of the coupling element (1) assigned to the tool or workpiece, said indent or indents (14) being embodied in such a way that the centring pins (27) which penetrate into the respective groove (13) are opposed, during the clamping process in the Z-direction by a spring force, and after said spring force is overcome the planar stop faces (10A) of the one coupling element (1) comes to bear against the stop faces (24) of the other coupling element (2).

9. Clamping device according to one of Claims 1 to 7, **characterized in that** one or more indents (41) is/are provided behind and/or to the side of the respective centring pin (40), said indent or indents being embodied in such a way that the centring pins (27) which penetrate the respective groove (13) are opposed, during the clamping process in the Z direction, by a spring force, and after said spring force is overcome the planar stop faces (10A) of the one element (1) come to bear against the bearing faces (24) of the other element (2).

10. Clamping device according to one of Claims 1 to 7, **characterized in that** a spring washer (37) into which the grooves (13C) are let in is provided.

11. Clamping device according to one of Claims 1 to 7, **characterized in that** the centring pins are arranged on a spring washer.

12. Clamping device according to one of preceding claims, **characterized in that** the coupling element (1) which is assigned to the tool or workpiece is provided with a groove-shaped recess (17) which adjoins the supporting part (11) on the inside.

13. Clamping device according to one of preceding claims, **characterized in that** the clamping bolt (21) has a multiplicity of clamping balls (22) which, during the clamping, bear against a wall of a corresponding depression (16) of the coupling element (1) which is assigned to the tool or workpiece.

14. Clamping device according to Claim 13, **characterized in that** the clamping balls (22) are pressed outward in the state of rest by a spring-loaded actuation element (30) which is displaceably arranged in the interior of the clamping bolt (21), the spring-loaded actuation element (30) being pneumatically displaceable counter to the spring tension in such a way that the clamping balls (22) are relieved.

15. Clamping device according to Claim 1, **characterized in that** the second coupling element (44) which is assigned to the tool or workpiece to be clamped has at least four clamping bolts (46) and at least four centring pins (47), and the first, fixed coupling element (45) has a number of grooves (49) which corresponds to the number of centring pins (47), the grooves (49) and centring pins (47) of the clamping device determining, in their entirety, the definitive position of the second coupling element (44) both in the X and Y directions and also in terms of the angular position about a defined Z axis.

16. Clamping device according to Claim 15, **characterized in that** the supporting element is embodied as a peripheral strip (54) whose inside corresponds to the external contour of the first, fixed coupling element (45), the supporting element (45) projecting beyond those parts (48, 49, 52) of the second coupling element (44) which are essential for the fine centring by more than the amount of super elevation of the protruding stock faces (51) of the first coupling element (45).

17. Clamping device according to Claim 15, **characterized in that** at least one supporting element (55, 56) which projects beyond those parts (48, 49, 52) of the second coupling element (44) which are essential for the fine centring by less than the amount of super elevation of the protruding stop faces (51) of the first coupling element (45) is arranged on the underside of the second coupling element (44).

18. Clamping device according to one of Claims 15 to 17, **characterized in that** four clamping bolts (46) are provided, a centring pin (47) being arranged between each two clamping bolts (46).

19. Clamping device according to one of Claims 15 to 18, **characterized in that** discrete spring elements (48) are provided into which the grooves (49) which are provided for the fine positioning are let, the spring elements (48) being inserted in a form fitting fashion into recesses (50) in the second coupling element (44) which is assigned to the tool or workpiece.

20. Clamping device according to one of Claims 15 to 19, **characterized in that** the centring pins (47) which are provided for the fine positioning are embodied as discrete elements and are inserted into recesses in the first, fixed coupling element (45).

21. Device for clamping workpieces in a defined position, which device is provided with a plurality of clamping devices (3) according to one or more of Claims 1 to 20, having a workpiece holder (4) on which a plurality of coupling elements (1) are arranged, the latter being intended to interact with a corresponding number of fixedly arranged coupling elements (2), the grooves and centring pins of the clamping devices (3) determining, in their entirety, the definitive position of the workpiece holder (4) both in the X and Y directions and also with respect to the angular position about a defined Z axis.

22. Device according to Claim 21, **characterized in that** a first clamping device is provided which comprises a coupling element which is assigned to the tool or workpiece and a fixed coupling element, the clamping device being provided with four grooves and centring pins, which fine centring elements together determine a position of the workpiece holder in the X and Y directions and thus the reference of the Z axis, and at least one further clamping device which is arranged at a distance from the first clamping device and is provided with two grooves and two centring pins being provided, which fine centring elements determine the position of the workpiece holder only with respect to the angular position about the Z axis.

23. Device according to Claim 21, **characterized in that** the workpiece holder (4) is of round construction and is provided with four clamping devices (3), each of which is provided with two grooves and two centring pins, the coupling elements (1) which are assigned to the tool or workpiece being arranged on the workpiece holder (4), symmetrically with respect to the centre axis (6) of said workpiece holder (4), and being angularly offset with respect to one another.

## Revendications

1. Dispositif de serrage pour un outil ou une pièce, avec un premier élément de couplage (2, 45) à disposer de façon fixe et un deuxième élément de couplage (1, 44) attribué à l'outil ou la pièce à serrer et séparable du premier élément de couplage, l'un des deux éléments de couplage (1, 44) étant pourvu pour le positionnement précis de rainures (13, 49), qui sont destinées à agir conjointement avec des tenons de centrage (26, 47) disposés sur l'autre élément de couplage (2, 45) pour la détermination de la position dans la direction X et/ou la direction Y, et d'autre part l'un des deux éléments de couplage (2, 45) présentant des surfaces de butée (24, 51) faisant saillie et l'autre élément de couplage (1, 44) présentant des surfaces d'appui (10A, 52) planes, lesquelles viennent s'appuyer après le serrage effectué sur les surfaces de butée (24, 51) et déterminent ainsi la position réciproque des deux éléments de couplage (1, 2, 44, 45) dans le sens de Z, et au moins un boulon de serrage (21, 46) étant prévu pour le verrouillage réciproque des deux éléments de couplage (1, 2, 44, 45), **caractérisé en ce que** le/les boulon(s) de serrage (21, 46) est/sont disposé(s) sur l'élément de couplage (2, 45) fixe et l'élément de couplage (1, 44) attribué à l'outil ou à la pièce présente un organe de support (11, 54, 55, 56) pourvu d'une surface de support (12, 58) côté extrémité, lequel déborde des parties (10A, 13, 14, 48, 49, 52) prévues sur cet élément de couplage (1, 44) et importantes pour le positionnement précis et l'organe de support (11) étant pourvu sur la face intérieure d'une bague d'étanchéité (32), qui s'appuie à l'extérieur sur l'élément de couplage (2) fixe lors de l'assemblage des deux éléments de couplage (1, 2).

2. Dispositif de serrage selon la revendication 1, **caractérisé en ce que** le côté intérieur de l'organe de support (11) correspond au contour extérieur de l'élément de couplage (2) fixe, et **en ce que** l'organe de support (11) déborde des parties (10A, 13, 14), importantes pour le centrage précis, de l'élément de couplage (1) attribué à l'outil ou à la pièce d'une valeur supérieure au surhaussement des surfaces de butée (24) saillantes de l'élément de couplage (2) fixe.

3. Dispositif de serrage selon la revendication 1 ou 2, **caractérisé en ce qu'**aussi bien l'élément de couplage (1) attribué à l'outil ou à la pièce que l'élément de couplage (2) fixe sont conçus de façon sensiblement cylindrique, l'organe de support (11) étant destiné à envelopper sous une forme annulaire l'élément de couplage (2) fixe, par le fait que le diamètre intérieur de l'organe de support (11) correspond au moins approximativement au diamètre extérieur de l'élément de couplage (2) fixe.

4. Dispositif de serrage selon l'une quelconque des revendications précédentes, **caractérisé en ce que** l'organe de support présente sur le côté intérieur une surface finale inclinée, qui est pourvue d'une rainure formant un angle avec les surfaces d'appui, rainure dans laquelle est réceptionnée la bague d'étanchéité.

5. Dispositif de serrage selon l'une quelconque des revendications précédentes, **caractérisé en ce que** l'élément de couplage (1) attribué à l'outil ou à la pièce est pourvu d'un alésage (18) central, dans lequel le boulon de serrage (21) de l'élément de couplage (2) fixé peut être ancré, **en ce que** le boulon de serrage (21) est réalisé conjointement avec l'alésage (18) de l'élément de couplage (1) attribué à l'outil ou à la pièce comme un élément de centrage approximatif, du fait que le boulon de serrage (21) est pourvu dans la zone d'extrémité d'une surface de centrage (21A) de conception inclinée et semi-circulaire, laquelle est destinée à agir conjointement avec une insertion (15) de forme annulaire et limitant l'alésage (18) central de l'élément de couplage (1) attribué à l'outil ou à la pièce sur le côté inférieur.

6. Dispositif de serrage selon la revendication 5, **caractérisé en ce que** l'insertion (15) de forme annulaire et limitant l'alésage (18) de l'élément de couplage (1) attribué à l'outil ou à la pièce présente une surface de centrage (15A) inclinée, l'insertion (15) de forme annulaire étant fixée de façon interchangeable et est à base d'un matériau qui est plus souple que le boulon de serrage (21).

7. Dispositif de serrage selon la revendication 5 ou 6, **caractérisé en ce que** la surface de centrage (21A) du boulon de serrage (21) s'étend sur au moins un tiers de sa surface d'extrémité libre.

8. Dispositif de serrage selon l'une quelconque des revendications précédentes, **caractérisé en ce qu'**il est prévu une ou plusieurs entailles (14) derrière et/ou sur le côté de la rainure respective (13) de l'élément de couplage (1) attribué à l'outil ou à la pièce, laquelle/lesquelles entaille(s) est (sont) conçue(s) de façon qu'une force élastique s'oppose aux tenons de centrage (27) pénétrant dans la rainure (13) concernée lors de l'opération de serrage dans le sens Z, et, après avoir surmonté cette force, les surfaces de contact (10A) planes d'un élément de couplage (1) s'appuient sur les surfaces de contact (24) de l'autre élément de couplage (2).

9. Dispositif de serrage selon l'une quelconque des revendications 1 à 7, **caractérisé en ce qu'**il est prévu un ou une plusieurs entaille(s) (41) derrière et/ou sur le côté du tenon de centrage (40) concerné, qui est/sont réalisée(s) de telle façon qu'une force de ressort est opposée aux tenons de centrage (27) pénétrant dans la rainure (13) respective lors de l'opération de serrage dans le sens Z, et que, après avoir surmonté cette force, les surfaces de contact (10A) planes d'un élément (1) viennent s'appuyer sur les surfaces d'appui (24) de l'autre élément (2).

10. Dispositif de serrage selon l'une quelconque des revendications 1 à 7, **caractérisé en ce qu'**il est prévu une rondelle élastique (37) dans laquelle les rainures (13C) sont enchâssées.

11. Dispositif de serrage selon l'une quelconque des revendications 1 à 7, **caractérisé en ce que** les tenons de centrage sont disposés sur une rondelle élastique.

12. Dispositif de serrage selon l'une quelconque des revendications précédentes, caractérisé en ce l'élément de couplage (1) attribué à l'outil ou à la pièce est pourvu d'un évidement (17) en forme de rainures et contigu sur le côté intérieur à la partie de support (11).

13. Dispositif de serrage selon l'une quelconque des revendications précédentes, **caractérisé en ce que** le boulon de serrage (21) présente une grande quantité de boules de serrage (22), lesquelles s'appuient lors du serrage sur la paroi d'une cavité (16) correspondante de l'élément de couplage (1) attribué à l'outil ou à la pièce.

14. Dispositif de serrage selon la revendication 13, **caractérisé en ce que** les boules de serrage (22) sont appuyées dans l'état de repos vers l'extérieur par un organe de commande (30) sollicité par ressort et disposé de façon coulissante à l'intérieur du boulon de serrage (21), l'organe de commande (30) chargé par ressort pouvant être déplacé de façon pneumatique dans le sens contraire à la prétension du ressort de telle sorte que les boules de serrage (22) sont soulagées.

15. Dispositif de serrage selon la revendication 1, **caractérisé en ce que** le deuxième élément de couplage (44) attribué à l'outil ou à la pièce à serrer présente au moins 4 boulons de serrage (46) et au moins quatre tenons de centrage (47) et le premier élément de couplage (45) fixe un nombre de rainures (49) correspondant au nombre de tenons de centrage (47), les rainures (49) et tenons de centrage (47) du dispositif de serrage définissant dans leur ensemble la position définitive du deuxième élément de couplage (44) aussi bien dans le sens X et Y que par rapport à la position angulaire autour d'un axe Z défini.

16. Dispositif de serrage selon la revendication 15, **caractérisé en ce que** l'organe de support est conçu comme une baguette (15) périphérique, dont le côté intérieur correspond au contour extérieur du premier élément de couplage (45) fixe, l'organe de soutien (54) dépassant des parties (48, 49, 52), essentielles pour le centrage précis, du deuxième élément de couplage (44) d'une valeur supérieure au surhaussement des surfaces de butée (51) débordantes du premier élément de couplage (45).

17. Dispositif de serrage selon la revendication 15, **caractérisé en ce que**, sur la face inférieure du deuxième élément de couplage (44), est disposé au moins un organe de soutien (55, 56), qui déborde des parties (48, 49, 52) essentielles pour le centrage précis, du deuxième élément de couplage (44) de moins de la valeur du surhaussement des surfaces de butée (51) saillantes du premier élément de couplage (45).

18. Dispositif de serrage selon l'une quelconque des revendications 15 à 17, **caractérisé en ce qu'**il est prévu quatre boulons de serrage (46), un tenon de centrage (47) étant disposé à chaque fois entre deux boulons de serrage (46).

19. Dispositif de serrage selon l'une quelconque des revendications 15 à 18, **caractérisé en ce qu'**il est prévu des éléments de ressort (48) discrets, dans lesquels les rainures (49) prévues pour le positionnement précis sont enchâssées, les éléments de ressort (48) étant engagés de façon mécanique dans un évidement (50) dans le deuxième élément de couplage (44) tourné vers l'outil ou la pièce.

20. Dispositif de serrage selon l'une quelconque des revendications 15 à 19, **caractérisé en ce que** les tenons de centrage (47) prévus pour le positionnement précis sont conçus comme des éléments discrets et sont engagés dans des évidements du premier élément de couplage (45) fixe.

21. Dispositif pour le serrage défini en position de pièces, qui est pourvu de plusieurs dispositifs de serrage (3) selon l'une quelconque ou plusieurs des revendications 1 à 20, avec un logement de pièce (4), sur lequel sont disposés plusieurs éléments de couplage (1), qui sont destinés à agir conjointement avec un nombre correspondant d'éléments de couplage (2) disposés de façon fixe, les rainures et tenons de centrage des dispositifs de serrage (3) fixant dans leur globalité la position définitive du logement de pièce (4) aussi bien dans les sens X et Y que par rapport à la position angulaire autour d'un axe Z défini.

22. Dispositif selon la revendication 21, **caractérisé en ce qu'**il est prévu un premier dispositif de serrage, qui comprend un élément de couplage attribué à l'outil ou à la pièce et un élément de couplage fixe, le dispositif de serrage étant pourvu de quatre rainures et de tenons de centrage, lesquels organes de centrage précis déterminent ensemble la position du logement de pièce dans les directions X et Y et donc la référence de l'axe Z, et au moins un autre dispositif de serrage disposé à distance du premier dispositif de serrage étant prévu, qui est pourvu de deux rainures et deux tenons de centrage, lesquels organes de centrage précis définissent la position du logement de pièce seulement par rapport à la position d'angle autour de l'axe Z.

23. Dispositif selon la revendication 21, **caractérisé en ce que** le logement de pièce (4) est conçu avec une forme ronde et est pourvu de quatre dispositifs de serrage (3), qui sont pourvus chacun de deux rainures et deux tenons de centrage, les éléments de couplage (1) attribués à l'outil ou à la pièce étant disposés de façon symétrique par rapport à l'axe central (6) du logement de pièce (4) sur celui-ci et sont décalés l'un par rapport à l'autre au niveau angulaire.
